# EUROPEAN PATENT SPECIFICATION

(11) **EP 2 320 743 B1**
(45) Date of publication and mention of the grant of the patent: **06.05.2015**
(21) Application number: 09780668.1
(22) Date of filing: 15.07.2009
(51) Int. Cl.: A21D 13/00, A21D 13/08, B65D 81/34

(54) **MICROWAVEABLE LAMINATED DOUGH PRODUCTS AND METHODS FOR MAKING SAME**
MIKROWELLENGEEIGNETE LAMINIERTE TEIGPRODUKTE UND VERFAHREN ZU IHRER HERSTELLUNG
PRODUITS DE PÂTE FEUILLETÉE À CUIRE AUX MICRO-ONDES ET PROCÉDÉS POUR LES PRÉPARER

(30) Priority: 21.08.2008 US 90760 P
(43) Date of publication of application: 18.05.2011
(60) Divisional application: 14184175.9
(73) Proprietor: Nestec S.A., 1800 Vevey (CH)
(72) Inventor: SHARMA, Richa, Aurora Ohio 44202 (US); LANDI, Riccardo, I-52031 Anghiari (ar) (IT); BROWN, Stacey, Twinsburg Ohio 44087 (US)
(74) Representative: Mollet, Beat Max
(86) International application number: PCT/EP2009/059107
(87) International publication number: WO 2010/020484

(56) References cited:
- WO-A-2005/085091
- US-A1- 2008 087 664
- DATABASE FSTA [Online] INTERNATIONAL FOOD INFORMATION SERVICE (IFIS), FRANkFURT-MAIN, DE; 1 November 1995 (1995-11-01), ZUCKERMAN H ET AL: "Temperature profiles at susceptor/product interface during heating in the microwave oven." XP002546545 Database accession no. 96-1-05-m0067 & JOURNAL OF FOOD PROCESSING AND PRESERVATION, vol. 19, no. 5, 1 November 1995 (1995-11-01), page 385, JOURNAL OF FOOD PROCESSING AND PRESERVATION 1995 CORRESPONDENCE (REPRINT) ADDRESS, J. MILTZ, DEP. OF FOOD ENG. & BIOTECH., TECHNION, ISRAEL INST. OF TECH., HAIFA 32000, ISRAEL
- WAGNER ET AL: "Comprehensive studies on the trans fatty acid content of Austrian foods: Convenience products, fast food and fats" FOOD CHEMISTRY, ELSEVIER SCIENCE PUBLISHERS LTD, GB, vol. 108, no. 3, 23 November 2007 (2007-11-23), pages 1054-1060, XP022461515 ISSN: 0308-8146

## Description

### BACKGROUND

The present disclosure relates generally to food technologies. More specifically, the present disclosure relates to microwavable filled laminated dough products having enhanced brownness and crispness and methods of making same.

Microwavable food products are known in the food industry. However, certain types of foods may not be considered viable substitutes for microwave cooking when compared to traditional cooking and baking methods because microwave cooking and baking may produce undesirable food textures and may not provide proper surface heating. Examples of such foods may include, for example, bread dough, pizza dough, puff pastry dough and the like. In contrast, traditional baking methods may provide such foods with a surface that is browned, crisp and desirable to consumers. Nevertheless, traditional cooking methods also require an increased amount of preparation time and the use of multiple pieces of kitchenware in the preparation of the food product.

Furthermore, package materials to receive a food item for storage and heating therein have been disclosed, for example in US 2008/0087664 A1. Therein, the disclosed package includes an opening and a closure mechanism and comprises an insulating microwave material. A plurality of packages in a stacked relation are also provided therein.

### SUMMARY

The present disclosure relates generally to the microwave preparation of a food product. More specifically, the present disclosure relates to laminated doughs, microwavable laminated dough products and methods of making same. The present disclosure may be used, for example, for preparing an improved laminated dough product having enhanced brownness and crispness upon exposure of the laminated dough to microwave energy.

Pursuant to an embodiment of the present disclosure, a microwavable food product is provided. The microwavable food product includes a package that includes an insulating material having a microwave susceptor material with at least one closed cell, wherein the package is dimensioned such that there is a free volume between an interior portion of the package and the laminated dough. The closed cell is capable of expanding upon exposure of the insulating material to microwave energy. Expansion of the closed cells aids in increasing the surface area contact between the insulating material and a laminated dough, which is contained in the package.

In an embodiment, the package includes a plurality of closed cells. The plurality of closed cells may form a pattern that includes an array of shapes selected from the group consisting of a circle, an oval, a triangle, a rectangle, a polygon, a right polygon, an equilateral polygon, a curvilinear shape, a symmetrical curvilinear shape or combinations thereof.

In an embodiment, package includes at least one venting hole.

In an embodiment, the microwavable laminated dough product includes two laminated doughs contained in one package. The laminated dough may be selected from the group consisting of a frozen raw laminated dough, a refrigerated raw laminated dough, or combinations thereof.

In an embodiment, the laminated dough contains a filling selected from the group consisting of a sweet filing, a savory filling or combinations thereof. The filling may be selected from the group consisting of meat, vegetables, sauce, fruit, egg, tofu, cheese or combinations thereof.

In an embodiment, the package of the microwavable food product may be dimensioned such that there is a distance between an interior portion of the package and the laminated dough, the distance ranging from about 4 mm to about 30 mm.

In an embodiment, the microwave active package includes a flexible package material attached to a cardboard package material.

In another embodiment, the present disclosure provides a microwavable food product. The microwavable food product includes a package comprising an insulating material having a microwave susceptor material, wherein the package is dimensioned such that there is a free volume between an interior portion of the package and the laminated dough, at least one closed cell and at least one vent hole. The vent hole may have any size including, for example, a size ranging from about 4 mm to about 30 mm. The package also includes a laminated dough contained in the package. The laminated dough may be selected from the group consisting of frozen raw laminated dough, refrigerated raw laminated dough, or combinations thereof.

In an embodiment, the package may define a substantially rectangular shape and the at least one vent hole may be located at a corner of the substantially rectangular shaped package.

In an embodiment, the package includes four vent holes. The four vent holes may be located one at each corner of a substantially rectangular shaped package.

In an embodiment, the laminated dough contains a filling selected from the group consisting of a sweet filing, a savory filling or combinations thereof.

In yet another embodiment, a method of cooking a microwavable food product is provided. The method includes packaging a laminated dough in a package having an insulating material including a microwave susceptor material and at least one closed cell, wherein the package is dimensioned such that there is a free volume between an interior portion of the package and the laminated dough. The method also includes exposing the package to microwave energy.

In an embodiment, the method further includes filling the laminated dough with a filling selected from the group consisting of a sweet filling, a savory filling or combinations thereof.

In an embodiment, the method further includes expanding at least one closed cell upon exposure of the package to microwave energy. Exposure of the package to microwave energy aids in cooking the laminated dough contained in the package.

In an embodiment, the package is exposed to microwave energy for about two minutes to about ten minutes.

In an embodiment, the method further includes venting at least a portion of the package. The venting may include removing at least a portion of the package or cutting at least a portion of the package. The source of the venting may be introduced by a consumer prior to exposure of the insulating material to microwave energy. The source of the venting may also be introduced during manufacturing of the package. When the venting is introduced during manufacturing of the package, the source of the venting may not be visible to the consumer. The source of the venting may appear, therefore, when the rise in pressure of the package due to exposure to microwave energy causes the source of venting to open in order to release the pressure.

In still yet another embodiment, a microwavable laminated dough product having about 0.5 grams or less of trans fat per serving size is provided. The serving size may vary. In an embodiment, the serving size is about 120 grams. In an embodiment, the 120 gram serving size includes about 60 grams of the laminated dough and about 60 grams of a filling.

In an embodiment, the laminated dough of the microwavable laminated dough product is selected from the group consisting of croissant dough, danish dough, puff pastry dough or combinations thereof.

In an embodiment, the microwavable laminated dough product is contained in a package including an insulating material having a microwave susceptor material, at least one closed cell, and at least one vent hole.

In yet another embodiment, a microwavable laminated dough having about 1% or less of trans fat per 100 grams is provided.

In still yet another embodiment, a microwavable laminated dough product having zero grams of trans fat as defined by the United States Food and Drug Administration is provided.

An advantage of the present disclosure is to provide an improved microwavable laminated dough product.

Yet another advantage of the present disclosure is to provide an improved method of making laminated dough products.

Another advantage of the present disclosure is to provide an improved method for microwave cooking a laminated dough.

Still yet another advantage of the present disclosure is to provide an improved laminated dough formula.

Another advantage is to provide a microwavable laminated dough having a reduced amount of trans fat.

Additional features and advantages are described herein, and will be apparent from, the following Detailed Description and the figures.

### BRIEF DESCRIPTION OF THE FIGURES

FIG. 1 is a perspective view of a microwavable filled laminated dough product showing a cross-section of a laminated dough in a package in accordance with an embodiment of the present disclosure.
FIG. 2 is a perspective view of a filled laminated dough having a substantially oblong shape in accordance with an embodiment of the present disclosure.
FIG. 3 is a perspective view of a cross-section of the filled laminated dough of FIG. 2.
FIG. 4 is a side view of a cross-section of an insulating material in accordance with an embodiment of the present disclosure.
FIG. 5 is a perspective view of a cross-section of an insulating material in accordance with an embodiment of the present disclosure.
FIGS. 6A-6C are side views of cross-sections of a microwavable laminated dough product in accordance with an embodiment of the present disclosure.
FIG. 7 is a perspective view of a cooked laminated dough in a package in accordance with an embodiment of the present disclosure.
FIG. 8 is a plan view of a package in accordance with an embodiment of the present disclosure.

### DETAILED DESCRIPTION

The present disclosure is generally directed to food technology. More specifically, the present disclosure is directed to raw laminated dough heated in a unique packaging that results in enhanced brownness, crispness and flaky light texture of the laminated dough after microwave cooking or baking. The performance of the laminated dough may be as good as or even better than cooking or baking in a conventional oven. The present disclosure is also directed toward methods for making same and improved laminated dough formulas. For example, the microwavable laminated dough products of the present disclosure are designed to provide an improved microwavable laminated dough product that is capable of having the laminated dough prepared from either a chilled, raw state or from a frozen, raw state with the convenience and reduced cooking time associated with microwave cooking. Moreover, the laminated dough product of the present disclosure may also contain zero grams trans fat per serving, as governed by regulations imposed by the United States Food and Drug Administration (FDA).

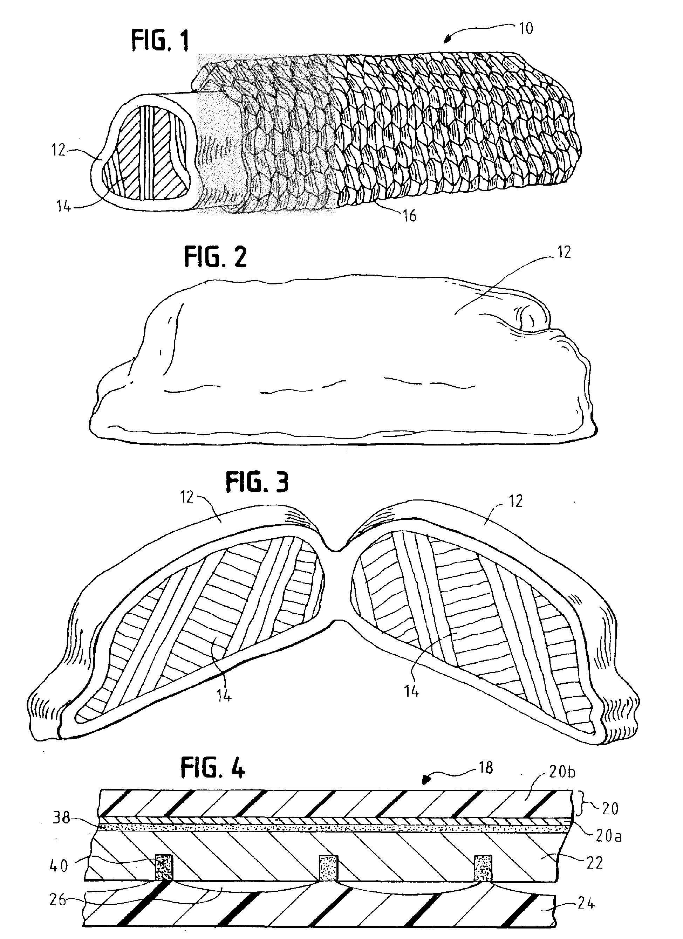

As shown in Figure 1, an embodiment of a microwavable laminated dough product of the present disclosure is generally designated by the numeral 10. The microwavable laminated dough product 10 includes a laminated dough 12 having a filling 14 and is partially surrounded by a microwave active package 16. Although the microwavable laminated dough product 10 is shown in Figure 1 as including a filling 14, the skilled artisan will appreciate that the microwavable laminated dough product 10 need not necessarily contain a filling 14. Further, although the laminated dough 12 of Figure 1 is shown as only partially surrounded by the microwave active package 16, the laminated dough 12 may also be completely surrounded by the microwave active package 15. As shown in Figure 1, the laminated dough 12 assumes a substantially cylindrical configuration. However, while the laminated dough 12 is shown in a substantially cylindrical configuration, other geometric shapes are possible. For example, the laminated dough 12 may be substantially oval, circular, square, triangular or other various geometric shapes. In an embodiment, the laminated dough 12 may have a substantially oblong shape, as is shown in Figure 2. In other words, the laminated dough 12 has an elongated shape and substantially curved sides.

Laminated doughs 12 are made by a process in which layers of dough and fat are alternated to form a dough mixture that may then be baked. When baked, the butter or fat worked into the layers of dough gives off moisture, and the resulting steam causes the thin layers of dough to puff and rise. Therefore, in contrast to other types of dough, laminated doughs 12 do not contain large amounts of typical sources of leavening, such as yeast, although certain laminated doughs such as, for example, croissants and danish doughs could contain biological or chemical leavening. In fact, certain laminated doughs 12 including, but not limited to, puff pastry doughs may not include any leavening. Instead, the leavening in such laminated doughs 12 is derived primarily from the steam generated by the moisture in the fat layers during baking, which expands in the oven as it lifts and separates the dough layers. Typical laminated doughs 12 include, for example, croissant, danish and puff pastry doughs. Although any laminated dough 12 may be used with respect to the present microwavable laminated dough products, in an embodiment, the laminated dough 12 is a puff pastry dough.

Puff pastry doughs generally consists of two portions; a dough portion and a fat portion. To form puff pastry dough, the dough portion is rolled out, or sheeted, into very thin layers of dough having predetermined dimensions depending on the desired layer size. Similarly, the fat portion is also rolled-out, or sheeted, into very thin layers of fat having predetermined dimensions depending on desired layer size. After the sheeting process, a thin layer of fat is enclosed in a layer of dough, which is then folded and rolled-out several times to create many alternating thin layers of dough and fat.

As discussed above, the leavening in puff pastry dough is derived when the moisture in the dough turns to steam, which provides a source of pressure in each layer of dough that during cooking creates an upward lift of the dough. Similarly, the air trapped in the dough expands upon heating, causing the dough to rise and separate into many thin, flaky layers. The fat that is folded into the layers of the dough is typically an excellent heat conductor and aids in quickly turning any moisture in the dough into steam.

The laminated dough 12 of the present disclosure may have unique properties or characteristics associated therewith. For example, the laminated dough 12 of the present disclosure may be flavored or have inclusions incorporated therein to compliment the product profile. The laminated dough 12 may include, but is not limited to flavorings selected from the group consisting of butter, nut, vanilla, fruit, herb, spice, and combinations thereof. Similarly, the laminated dough 12 may also include, for example, inclusions selected from the group consisting of fruit pieces, herbs, spices, vegetables, cheeses, confectionery materials, and combinations thereof.

Similarly, the laminated dough 12 of the present disclosure may also include at least one topping. For example, the laminated dough 12 of the present disclosure may be topped with solids, pastes, gels, syrups, sauces or other liquids alone. Similarly, the laminated dough 12 may be topped with pastes, gels, syrups, sauces or other liquids having solids or inclusions contained therein. Nonlimiting examples of laminated dough 12 toppings include cheeses, herbs, spices, nuts, and cocoa (*e.g.,* chocolate).

In an embodiment, the laminated dough 12 of the present disclosure contains zero grams of trans fat per serving size, as defined by the United States Food and Drug Administration (FDA), which governs the current regulations regarding the Nutrition Facts panel associated with food products. According to the FDA's regulatory chemical definition, a trans fat (also known as trans fatty acid) is an unsaturated fatty acid that contains one or more isolated (*i.e.,* nonconjugated) double bonds in a trans configuration (excluding, however, conjugated linoleic acid). Trans fats are a specific type of fat formed when liquid oils are made into solid fats. Trans fats also behave like saturated fats by raising low-density lipoprotein (LDL) cholesterol that increases the consumer's risk of coronary heart disease. Such fats can be found, for example, in shortening, hard margarine, some crackers, cookies and snack foods.

Since January 1, 2006, the FDA has required that all food manufacturers list the amount of trans fats on the Nutrition Facts panels of the manufactured food products. Specifically, the FDA requires that the amount of trans fat in a serving be listed on a separate line under the saturated fats on the Nutrition Facts panel for the food product. However, according to the FDA, trans fat amounts do not have to be listed on the Nutrition Facts panel for the food product if the total fat in a food is less than 0.5 grams per serving size, and if no claims are made about fat, fatty acids or cholesterol content. If the trans fat content is not listed on the Nutrition Facts panel of the food product because it contains less than 0.5 grams of trans fat per serving size, a footnote is usually added to the Nutrition Facts panel stating that the food product is "not a significant source of trans fat."

In an embodiment, the laminated dough 12 of the present disclosure has less than about 1% trans fat per 100 grams. However, the serving size may vary. In an embodiment, the serving size ranges from about 40 grams to about 100 grams. In another embodiment, the serving size ranges from about 50 grams to about 90 grams. In yet another embodiment, the serving is about 60 grams. Because the estimated total trans fat content for the laminated dough 12 is directly proportional to the serving size, it is possible to vary the total amounts of trans fat for the microwavable laminated dough product 10 of the present disclosure based on the serving size.

For example, in an embodiment, the laminated dough 12 of the present disclosure has a fat distribution as shown in Table 1. Assuming, for example, a 120 gram serving size of a laminated dough product that comprises 60 grams of the dough of Table 1 and 60 grams of a salmon filling (containing zero grams trans fat) inside the dough, the estimated total trans fat would be 0.46 grams of trans fats. Accordingly, in another embodiment, the laminated dough 12 of the present disclosure has zero grams trans fat per serving size, as defined by the 0.5 grams trans fat threshold established by the FDA. In other words, so long as the total trans fat content of the microwavable laminated dough product 10 includes less than 0.5 grams of trans fat in the laminated dough 12 (and no trans fats in the filling 14), the microwavable laminated dough product 10 qualifies under current Nutrition Facts panel regulations to label the product as a zero trans fat product.

Therefore, in an embodiment, the microwavable laminated dough product 10 of the present disclosure has zero grams trans fat per serving size. The skilled artisan will appreciate, however, that the amount of trans fat in a laminated dough product 10 containing a filling 14 may be divided amongst the laminated dough 12 and the filling 14 in any manner so long as the total trans fat content of the microwavable laminated dough product 10 includes less than 0.5 grams of trans fat per serving size.

**Table 1**

| **Dough Formulation** | |
|---|---|
| | Dough Formulation |
| Triglycerides | 16.80% |
| Saturated Fat | 3.36% |
| Monosaturated Fat | 9.10% |
| Trans Fat | 0.78% |
| Polyunsaturated Fat | 2.67% |

In an embodiment, the laminated dough 12 of the present disclosure has a fat distribution as shown in Table 2. Assuming, for example, a 120 gram serving size of a laminated dough product that comprises 60 grams of the dough of Table 2 and 60 grams of a salmon filling (containing zero grams trans fat) inside the dough, the estimated total trans fat would be 0.66 grams of trans fats. In an embodiment, the serving size is 120 grams and includes 60 grams of the laminated dough 12 of Table 2 and 60 grams of the filling 14 that does not include any trans fats.

**Table 2**

| **Dough Formulation** | |
|---|---|
| | Dough Formulation |
| Triglycerides | 48.1% |
| Saturated Fat | 21.5% |
| Monosaturated Fat | 18.5% |
| Trans Fat | 1.1% |
| Polyunsaturated Fat | 11.4% |

In an embodiment, the laminated dough 12 of the present invention includes a filling 14 as discussed above and as shown in Figure 3. The filling 14 may be fully cooked, partly cooked or raw prior to introduction into the laminated dough 12. Although the laminated dough 12 of the present disclosure is not limited to the use of puff pastry dough, because puff pastry dough is typically made primarily of water, flour and butter, and contains very little, if any, sugar, the dough may be advantageously used as a wrapping or container for sweet or savory fillings such as meats, cheeses, fruits, egg, tofu, and combinations thereof. Typical meat fillings may include, but are not limited to, poultry, beef, pork, fish, and combinations thereof. Vegetable fillings may include, but are not limited to, onions, peppers, carrots, zucchini, mushrooms, spinach, tomatoes, cucumbers, corn, peas, broccoli, and combinations thereof Similarly, cheese filings may include, but are not limited to, american, swiss, cheddar, blue, colby, brie, and combinations thereof.

The filling may also comprise a liquid such as a sauce or a gravy. However, if the filling comprises a liquid, the liquid should have a sufficient viscosity such that the liquid will remain within the puff pastry dough both during and after cooking. It will be appreciated that the filling is not limited to the ingredients listed above, and that the filling may comprise any edible food.

After addition of a filling 14 to the laminated dough 12, if such filling 14 is so desired, the laminated dough 12 is packaged in a microwave active packaging 16 as is shown, in part, by Figure 1. The microwave active packaging provides several consumer benefits including, but not limited to, greater surface heating of food products, insulation of a food product from the effects of heat sinks in a microwave oven environment, retention of proper amounts of heat and moisture, and greater surface area contact between the food product and the packaging. Exemplary microwave active packages having similar properties are disclosed in U.S. Patent No. 7,019,271, the entire disclosure of which is incorporated herein by reference.

In an embodiment, the microwave active package 16 includes an insulating microwave packaging material 18 that is formed by adhering a microwave susceptor material 20 to a dimensionally stable substrate 22 using an adhesive 38. The dimensionally stable substrate 22 is then bonded to a plastic film 24 using adhesive 40 in a pattern bond that creates closed cells 26, as is shown in Figure 4. As used herein, "closed cells" means a volume of free space that is formed between the substrate 22 and the plastic film 24 when the substrate 22 is bonded to the plastic film 24 in a pattern bond. Any number of closed cells 26 may be formed during creation of the insulating material 18. For example, only one closed cell 26 may be provided. Alternatively, a plurality of closed cells 26 may be provided. The pattern bond that forms the closed cells 26 may include an array of shapes selected from the group consisting of a circle, an oval, a triangle, a rectangle, a polygon, a right polygon, an equilateral polygon, a curvilinear shape, a symmetrical curvilinear shape, and combinations thereof.

The microwave susceptor material 20 used to form the insulating material 18 is a conductive structure that undergoes heating when exposed to microwave radiation and is typically used in microwave cooking to tailor the heating, crisping, and browning of microwavable foods. Microwave susceptors typically comprise a laminated structure having a thin, microwave-absorbing layer disposed between a structural backing layer and a polymer barrier layer. For example, in an embodiment, the thin, microwave-absorbing layer may comprise a thin film of aluminum 20a upon which a plastic film 20b is bonded.

The plastic film 24 may include any suitable polymer film. For example, in an embodiment, the plastic film 24 is a polyester film that is biaxially-oriented. The substrate 22 is bonded to the plastic film 24 along bond lines arranged in a pattern to form closed cells 26, as previously discussed. The closed cells 26 may be substantially vapor impermeable.

When the microwave active package 16 is exposed to microwave energy in a microwave oven, the plastic film 20b of the microwave susceptor material 20 heats and softens decreasing the resistance of the susceptor material 20 to the expansion of moisture and the formation of expanded vapor pockets 28, as will be discussed further herein. Upon heating, the plastic film 24 contracts along its length and width as a result of its biaxial orientation. Accordingly, the plastic film 24 remains substantially flat during heating instead of expanding.

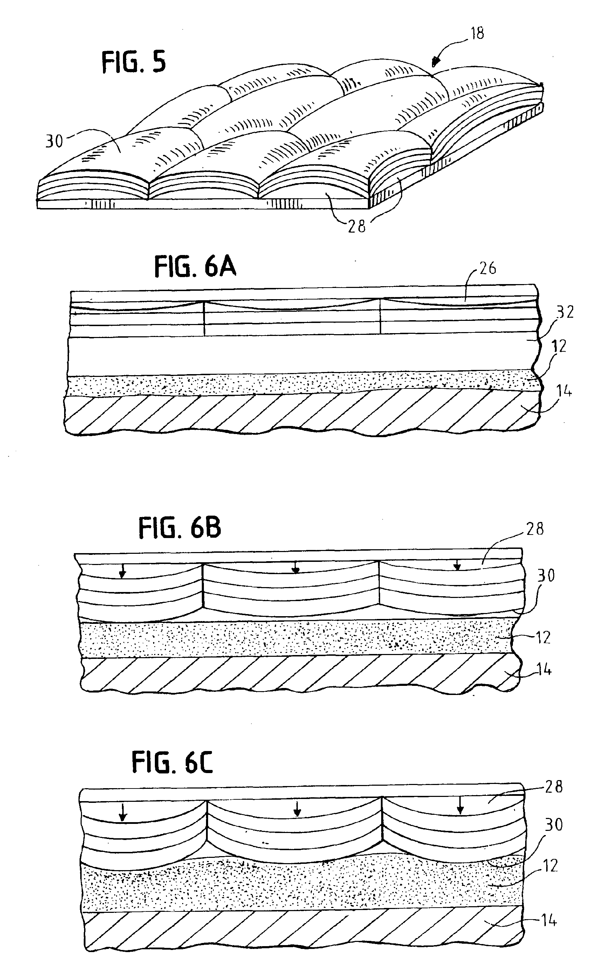

In contrast, as moisture trapped in the substrate 22 heats, expands, and escapes creating pressure that expands the closed cells 26 to form expanded vapor pockets 28, each closed cell 26 of the insulating material 18 bulges to form a pattern of raised pillow-like formations 30 on the susceptor-side of the insulating material 18, as is shown in Figure 5. The pattern of the raised pillow-like formations 30 will, naturally, depend on the pattern bond used to create the closed cells 26 by adhering the substrate 22 to the plastic film 24. For example, as is shown in Figure 5, because the pattern bond of the substrate 22 to the plastic film 24 was in the shape of hexagons, the pillow-like formations 30 are also in the shape of hexagons. The skilled artisan will understand, however, that, as discussed above, the pattern bond and, consequently, the pillow-like formations 30 may take on any shape and are not limited to those shapes illustrated in the figures. The contraction of the plastic film 24 works in conjunction with the bulging of the susceptor material 20 to enhance the loft of the pillow-like formations 30. The expanded vapor pockets 28 also help to insulate the laminated dough 12 from the microwave oven environment to reduce heat transfer between the laminated dough 12 and the microwave oven environment.

As shown in Figures 6A-6C, as the closed cells 24 of the insulating material 18 expand to form expanded vapor pockets 28 during cooking, the laminated dough 12 also rises as a result of the steam escaping from the laminated dough 12. Eventually, the laminated dough 12 and expanded vapor pockets 28 contact, as is shown in Figure 6B. Depending on the manufacturing specifications for the insulating material 18, and depending on the formula of the laminated dough 12, either may continue to expand and to force the two into even great contact, as is shown in Figure 6C. The expanded vapor pockets 28, therefore, help to ensure the necessary and uniform contact of the susceptor material 20 with the laminated dough 12 as it bakes and rises in the microwave oven, which ultimately results in a browned, crispy and flaky crust.

Generally speaking, the microwave active package 16 of the present disclosure should have dimensions that are larger than the laminated dough 12 in order to allow the laminated dough 12 to expand upon heating. As such, there is a free volume 32 at least between a top portion of the laminated dough 12 and the microwave active package 16 prior to cooking, but preferably also between the sides of the laminated dough 12 and the sides of the microwave active package 16. The free volume 32 allows the space necessary for the closed cells 24 of the microwave active package 16 and the laminated dough 12 to expand and rise, respectively, during heating.

In an embodiment, a distance measured between the top portion of the laminated dough 12 and an interior portion of the microwave active package 16 ranges from about 2 mm to about 50 mm. In an alternative embodiment, the distance measured between the top portion of the laminated dough 12 and an interior portion of the microwave active package 16 ranges from about 4 mm to about 40 mm. In a preferred embodiment, the distance measured between the top of laminated dough 12 and an interior portion of the microwave active package 16 ranges from about 6 mm to about 30 mm.

The microwave active package 16 of the present disclosure may take on any shape, size or configuration known in the art for packaging microwavable foods. For example, the microwave active package 16 may be a sleeve (not shown) for surrounding the laminated dough 12. The sleeve may be formed by folding the insulating material 18 and joining the two opposing edges with adhesive or heat sealing. Similarly, two sheets of the insulating material 18 may be bonded together such that the closed cells 26 of the susceptor material 20 face each other on the interior of a formed pouch, as is shown, in part, by Figure 1. Further, the insulating material 18 may be used in combination with a body having structural integrity including, for example, a paperboard sheet or carton (not shown). For example, in an embodiment, the microwave active package 16 comprises a flexible package material attached to a cardboard package material (not shown). In an embodiment, the flexible package material comprises the insulating material 18. In general, the microwave active package 16 of the present disclosure may have any configuration known in the art that provides proper surface heating of the laminated dough 12 and proper heat retention and moisture control.

In order for the frozen or raw laminated dough 12 to maintain its original shape during microwave cooking, the microwave active package 16 must also provide sufficient structural integrity and resistance to excessive expanding by the laminated dough 12 during heating. However, the microwave active package 16 of the present disclosure may be rigid or flexible or a combination thereof. For example, in a preferred embodiment, the microwave active package 16 may comprise a flexible pouch or similar packaging. Alternatively, the microwave active package 16 may be formed by laminating the insulating material 18 to a paperboard structure to form a rigid packaging. In an additional embodiment, the microwave active package 16 may comprise a rigid base structure with a flexible top that may include, for example, a film top that is adhered to the rigid base structure.

In an embodiment, there may be only one laminated dough 12 contained within the microwave active package 16. Alternatively, there may be multiple laminated doughs 12 contained within one microwave active package 16. For example, in an embodiment, there may be two laminated doughs 12 contained within one microwave active package 16 (not shown). In an embodiment where there is more than one laminated dough 12 contained in the microwave active package 16, the microwave active package 16 may have the same structure as a microwave active package 16 that contains only one laminated dough 12. However, in an embodiment where a microwave active package 16 contains more than one laminated dough 12, the microwave active package 16 may have a structure wherein there is a divider or a seal between the multiple laminated doughs 12 (not shown). For example, in an embodiment, the laminated dough 12 is a mini appetizer and the microwave active package 16 contains two mini appetizer laminated doughs 12 separated by a seal or a barrier formed in the microwave active package 16 between the two laminated doughs 12.

Once the microwavable filled laminated dough product 10 is assembled and includes the laminated dough 12 contained within the microwave active package 16, the filled laminated dough product 10 is ready to be cooked in the microwave. The laminated dough 12 may be cooked directly from a frozen, raw state with or without being defrosted, or the laminated dough 12 may be prepared from a refrigerated, raw state. Similarly, the laminated dough 12 may be packaged before or after freezing. In a preferred embodiment, the laminated dough 12 is frozen after packaging. The amount of time necessary to cook the microwavable filled laminated dough products 10 of the present disclosure depends on the size of the laminated dough 12. For example, the time necessary to thoroughly cook a laminated dough 12 may range from about one and one half minutes to about 10 minutes. Alternatively, the time necessary to thoroughly cook an average-sized laminated dough 12 may range from about three minutes to about eight minutes.

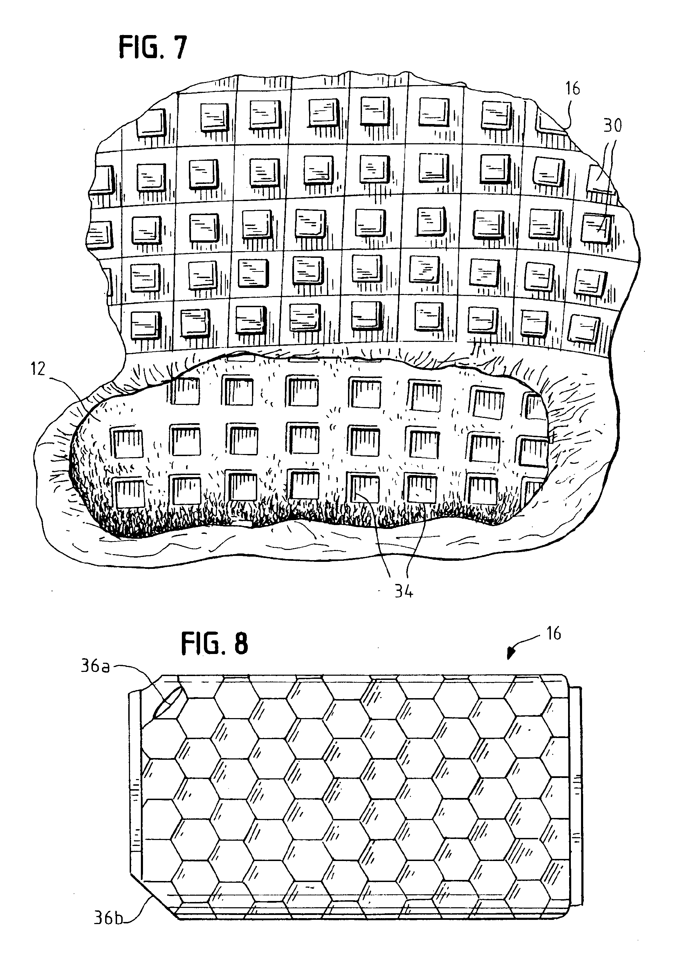

Figure 7 illustrates an example of what the laminated dough 12 may look like after exposure of the laminated dough 12 to microwave energy during microwave heating and baking. In Figure 7, the microwave active package 16 (in the form of a pouch) has been cut and opened to show the repeating pattern of the browned and crisped portions 34 of the laminated dough 12 that result when the laminated dough 12 rises and the closed cells 26 expand to form the pillow-like formations 30 that contact the laminated dough 12 during cooking. The skilled artisan will appreciate that the browned and crisped portions 34 of the laminated dough 12 may have any shape or size depending on the shape and size of the pillow-like formations 30. Moreover, the skilled artisan will also appreciate the flaky and layered appearance of the laminated dough 12 (not shown) that results from microwave cooking and/or baking.

In an additional embodiment, the microwave active package 16 of the present disclosure includes at least one vent hole 36 to allow steam to escape from the interior of the microwave active package 16 during microwave heating. The vent hole 36 also allows for the proper amount of heat retention within the microwave active package 16 and at certain locations within the microwave active package 16 during heating. The microwave active package 16 may include any number of vent holes 36, introduced into the microwave active package 16 at any time and in any location on the microwave active package 16.

For example, the vent holes 36 may be introduced in a single location on the microwave active package 16, or in any number of locations thereon. The vent holes 36 may be arbitrarily introduced into the microwave active package 16, or may be repeated in a regular pattern on the microwave active package 16. The vent holes 36 may be incorporated into the package during the manufacturing process, or may be introduced by a consumer prior to microwave cooking. When the vent holes 36 is introduced during manufacturing of the package, the vent holes 36 (i.e., the source of the venting) may not be visible to the consumer. The vent holes 36 may appear, therefore, when the rise in pressure of the package due to exposure to microwave energy causes the vent holes 36 to open to release the pressure contained in the package. Thus, the vent holes 36 may or may not be visible to a consumer prior to cooking or baking the microwavable laminated dough product 10. Moreover, the venting may be a result of a self-venting vent hole 36.

The vent holes 36 may be any intended defect or point of weakness in the structural integrity of the package that sufficiently vents moisture and pressure from an interior portion of the microwave active package 16. The defect in the structural integrity of the microwave active package 16 may include, but is not limited to, any cut, slit, tear, seal, perforation, puncture or removed piece of the microwave active package 16. In an embodiment, and as shown in Figure 8, the vent hole 36 comprises a diagonal slit 36a cut on a corner of the packaging and ranges in size from about 10 mm to about 35 millimeters. In another embodiment, and as is also shown in Figure 8, the vent hole 36 is formed by cutting off at least one corner 36b of the microwave active package 16. In an embodiment, the vent hole 36 is formed by a self-venting seal that opens during cooking or baking of the microwavable laminated dough product 10. In an embodiment, the size of the vent holes 36 ranges from about 2 mm to about 50 mm. In an alternative embodiment, the size of the vent holes 36 ranges from about 5 mm to about 40 mm. In another embodiment, the size of the vent holes 36 ranges from about 10 mm to about 35 mm. In yet another embodiment, the size of the vent holes ranges from about 4 mm to about 30 mm.

In a preferred embodiment, the microwavable filled laminated dough product 10 is an entrée. For example, a filled laminated dough 12 may comprise, but is not limited to, a puff pastry product that is filled with a protein source and vegetables. In an alternative embodiment, however, a filled laminated dough 12 may be an appetizer or a dessert. For example, the filled laminated dough 12 may be a puff pastry product that is filled with a fruit filling.

By way of example and not limitation, the following Examples are illustrative of various embodiments of the present disclosure. In the Examples, all percentages are by weight unless otherwise indicated.

### EXAMPLE 1

### Puff Pastry Formula and Procedure

### Formula:

| **Ingredient** | **Bakers %** | **Weight (g)** |
|---|---|---|
| Flour (12% protein) | 100 | 1500 |
| Salt | 1 | 15 |
| All Purpose Shortening | 10 | 150 |
| Water | 55 | 825 |
| Cream of Tartar | 0.75 | 11 |
| Fat | 30-50 | 450-750 |

### Procedure:

Blend all dry ingredients in a 20 quart mixer with a dough hook attachment on speed one for one minute. Increase to speed two and mix for six minutes. Allow the dough to rest for about 5 minutes.

Roll out, or sheet, the dough to a thickness of about 10 mm and dimensions of about 12 inches by 18 inches. Roll out, or sheet, the laminate fat to a thickness of about 5 mm and dimensions of about 11 inches by 9 inches. Place the laminate fat on top of the dough so that the 11 inch side of the laminate fat is along the 12 inch side of the dough. The laminate fat should be placed about one half inch from the edge of the dough. Fold a piece of the dough with no laminate fat on top of it over the middle portion of the laminate fat. Take the remaining side of the laminate fat and dough and place it over the top of the dough previously folded down. Turn the dough 90°. Begin turns of the dough by sheeting the dough to a thickness of about 10 mm, and perform two book turns of the dough (turning the dough 90° between each book turn). Cover the dough with plastic wrap, and allow the dough to rest for 30 minutes in the refrigerator. Remove the dough from the refrigerator and sheet to a thickness of about 10 mm and dimensions of about 12 inches by about 18 inches. Fold the dough in half, from the short end to the short end and turn 90°. Sheet the dough to a thickness of about 10 mm and perform a book fold. Wrap the dough in plastic wrap and place the dough in the refrigerator for about 30 minutes before using the dough to make a laminated dough product.

### EXAMPLE 2

### Salmon and Vegetable Filling Recipe and Procedure

### Recipe:

### SALMON

| **Ingredient** | **Formula %** | **Grams** |
|---|---|---|
| Salmon (raw) | 97.38 | 68.166 |
| Lemon Zest | 0.21 | 0.147 |
| Thyme IQF | 0.19 | 0.133 |
| Extra Virgin Olive Oil | 1.15 | 0.805 |
| Garlic Paste | 0.43 | 0.301 |
| Salt | 0.64 | 0.448 |

### VEGETABLE

| **Ingredient** | **Formula %** | **Grams** |
|---|---|---|
| Extra Virgin Olive Oil | 5.83 | 1.166 |
| Onion Julienne | 15.55 | 3.11 |
| Zucchini Julienne | 38.87 | 7.774 |
| Carrots Julienne | 38.87 | 7.774 |
| Salt | 0.78 | 0.156 |
| Black Pepper | 0.10 | 0.02 |

### ASSEMBLY

| **Ingredient** | **Formula %** | **Grams** |
|---|---|---|
| Puff Pastry | 50 | 90 |
| Vegetables | 11.11 | 20 |
| Salmon Filling | 38.89 | 70 |

### Procedure:

To prepare the salmon filling, mix all of the ingredients in the salmon recipe in the Extra Virgin Olive Oil and brush some of the Extra Virgin Olive Oil onto the surface of the salmon.

To prepare the vegetable mix, cook all of the vegetable ingredients in extra virgin olive oil to remove excess moisture from the vegetables. Allow the vegetables to cool.

To assemble the puff pastry product, place the prepared salmon filling on a square cut dough sheet. Deposit the prepared vegetable mix on the salmon surface and fold the dough so that the seam of the puff pastry product is on the bottom. Pinch the sides of the puff pastry product.

Place the puff pastry product into a package in accordance with the present disclosure. Heat the puff pastry product in a microwave oven for about three to about eight minutes, depending on desired preferences for brownness and crispness of the cooked puff pastry product.

### EXAMPLE 3

### Heating the Puff Pastry Product

In an embodiment, the puff pastry product of Example 2 is prepared and placed into a package in accordance with the present disclosure. To vent the package, the four corners of the package are cut off, or snipped, to create vent holes. The puff pastry product and the surrounding package are then placed into the microwave to be cooked or baked. The puff pastry product is baked in the microwave for approximately 4 minutes. After baking, the puff pastry product is left standing in the microwave for approximately 2 minutes before the puff pastry product is removed from the microwave and the packaging.

An outer portion of the puff pastry product appears browned, crisp, flaky and aesthetically appealing. When the puff pastry product is cut open via a vertical cross-section, the dough of the puff pastry product appears crisp, flaky and layered. As such, the skilled artisan will appreciate that a puff pastry product in accordance with the present disclosure may perform as good as, or even better than, products baked in a conventional oven.

It should be understood that various changes and modifications to the presently preferred embodiments described herein will be apparent to those skilled in the art. Such changes and modifications can be made without departing from the spirit and scope of the present subject matter and without diminishing its intended advantages. It is therefore intended that such changes and modifications be covered by the appended claims.

## Claims

1. A microwavable food product comprising:
a package comprising an insulating material having a microwave susceptor material with at least one closed cell; and
at least one laminated dough contained in the package,
wherein the package is dimensioned such that there is a free volume between an interior portion of the package and the laminated dough.

2. The microwavable food product of Claim 1, the at least one closed cell capable of expanding upon exposure of the insulating material to microwave energy.

3. The microwavable food product of Claim 1 or Claim 2, comprising a plurality of closed cells.

4. The microwavable food product of Claim 3, the plurality of closed cells comprising a pattern, the pattern comprising an array of shapes selected from the group consisting of a circle, an oval, a triangle, a rectangle, a polygon, a right polygon, an equilateral polygon, a curvilinear shape, a symmetrical curvilinear shape, and combinations thereof.

5. The microwavable food product of any one of Claims I to 4, the package comprising at least one venting hole.

6. The microwavable food product of any one of Claims 1 to 5, the laminated dough containing a filling selected from the group consisting of a sweet filing, a savory filling, and combinations thereof.

7. The microwavable food product of any one of Claims 1 to 6, the laminated dough selected from the group consisting of a frozen raw laminated dough, a refrigerated raw laminated dough, and combinations thereof.

8. A method of cooking a microwavable food product, the method comprising:
packaging a laminated dough in a package comprising an insulating material including a microwave susceptor material and at least one closed cell; and
exposing the package to microwave energy,
wherein the package is dimensioned such that there is a free volume between an interior portion of the package and the laminated dough.

9. The method of Claim 8, comprising filling the laminated dough with a filling selected from the group consisting of a sweet filling, a savory filling, and combinations thereof.

10. The method of Claim 8 or Claim 9, comprising expanding the at least one closed cell upon the exposure to microwave energy.

11. The method of any one of Claims 8 to 10, comprising venting at least a portion of the package.

## Patentansprüche

1. Mikrowellengeeignetes Nahrungsmittelprodukt mit:
einer Verpackung, die ein Isoliermaterial umfasst, das einen Mikrowellen-Suszeptorstoff mit mindestens einer geschlossenen Zelle aufweist; und
mindestens einem in der Verpackung enthaltenen Schichtteig,
wobei die Verpackung derart bemessen ist, dass ein freies Volumen zwischen einem Innenbereich der Verpackung und dem Schichtteig vorhanden ist.

2. Mikrowellengeeignetes Nahrungsmittelprodukt gemäß Anspruch 1, wobei sich die mindestens eine geschlossene Zelle ausdehnen kann, wenn Mikrowellenenergie auf das Isoliermaterial einwirkt.

3. Mikrowellengeeignetes Nahrungsmittelprodukt gemäß Anspruch 1 oder Anspruch 2, mit einer Vielzahl von geschlossenen Zellen.

4. Mikrowellengeeignetes Nahrungsmittelprodukt gemäß Anspruch 3, wobei die Vielzahl von geschlossenen Zellen ein Muster aufweist, wobei das Muster eine Anordnung von Formen umfasst, die aus der Gruppe bestehend aus einem Kreis, einem Oval, einem Dreieck, einem Rechteck, einem Polygon, einem geraden Polygon, einem gleichseitigen Polygon, einer gekrümmten Form, einer symmetrischen gekrümmten Form sowie Kombinationen aus diesen ausgewählt sind.

5. Mikrowellengeeignetes Nahrungsmittelprodukt gemäß einem der Ansprüche 1 bis 4, wobei die Verpackung mindestens eine Lüftungsöffnung enthält.

6. Mikrowellengeeignetes Nahrungsmittelprodukt gemäß einem der Ansprüche 1 bis 5, wobei der Schichtteig eine Füllung ausgewählt aus der Gruppe bestehend aus einer süßen Füllung, einer pikanten Füllung sowie Kombinationen aus diesen enthält.

7. Mikrowellengeeignetes Nahrungsmittelprodukt gemäß einem der Ansprüche 1 bis 6, wobei der Schichtteig aus der Gruppe bestehend aus einem gefrorenen rohen Schichtteig, einem gekühlten rohen Schichtteil und Kombinationen aus diesen ausgewählt ist.

8. Verfahren zum Garen eines mikrowellengeeigneten Nahrungsmittelprodukts, mit den Schritten:
Verpacken eines Schichtteigs in einer Verpackung, die ein Isoliermaterial mit einem Mikrowellen-Suszeptorstoff und mindestens einer geschlossenen Zelle umfasst; und
Einwirken von Mikrowellenenergie auf die Verpackung,
wobei die Verpackung derart bemessen ist, dass ein freies Volumen zwischen einem Innenbereich der Verpackung und dem Schichtteig vorhanden ist.

9. Verfahren gemäß Anspruch 8, das das Füllen des Schichtteigs mit einer Füllung ausgewählt aus der Gruppe bestehend aus einer süßen Füllung, einer pikanten Füllung sowie Kombinationen aus diesen umfasst.

10. Verfahren gemäß Anspruch 8 oder Anspruch 9, das bei Einwirkung von Mikrowellenenergie das Ausdehnen der mindestens einen geschlossenen Zelle umfasst.

11. Verfahren gemäß einem der Ansprüche 8 bis 10, das das Belüften von mindestens einem Bereich der Verpackung umfasst.

## Revendications

1. Produit alimentaire pour micro-ondes comprenant :
un emballage comprenant un matériau isolant ayant un matériau sensible aux micro-ondes avec au moins une cellule fermée ; et
au moins une pâte feuilletée contenue dans l'emballage,
dans lequel l'emballage est dimensionné de telle sorte qu'il existe un volume libre entre une partie intérieure de l'emballage et la pâte feuilletée.

2. Produit alimentaire pour micro-ondes selon la revendication 1, ladite au moins une cellule fermée étant capable de s'agrandir lors d'une exposition du matériau isolant à de l'énergie micro-ondes.

3. Produit alimentaire pour micro-ondes selon la revendication 1 ou la revendication 2, comprenant une pluralité de cellules fermées.

4. Produit alimentaire pour micro-ondes selon la revendication 3, la pluralité de cellules fermées comprenant un motif, le motif comprenant un ensemble de formes choisies parmi le groupe constitué par un cercle, un ovale, un triangle, un rectangle, un polygone, un polygone droit, un polygone équilatéral, une forme curviligne, une forme curviligne symétrique, et des combinaisons de ceux-ci.

5. Produit alimentaire pour micro-ondes selon l'une quelconque des revendications 1 à 4, l'emballage comprenant au moins un trou de ventilation.

6. Produit alimentaire pour micro-ondes selon l'une quelconque des revendications 1 à 5, la pâte feuilletée contenant une garniture choisie parmi le groupe constitué par une garniture sucrée, une garniture salée, et des combinaisons de celles-ci.

7. Produit alimentaire pour micro-ondes selon l'une quelconque des revendications 1 à 6, la pâte feuilletée étant choisie parmi le groupe constitué par une pâte feuilletée crue congelée, une pâte feuilletée crue réfrigérée, et des combinaisons de celles-ci.

8. Procédé de cuisson d'un produit alimentaire pour micro-ondes, le procédé comprenant :
un emballage d'une pâte feuilletée dans un emballage comprenant un matériau isolant incluant un matériau sensible aux micro-ondes et au moins une cellule fermée ; et
une exposition de l'emballage à de l'énergie micro-ondes,
dans lequel l'emballage est dimensionné de telle sorte qu'il existe un volume libre entre une partie intérieure de l'emballage et la pâte feuilletée.

9. Procédé selon la revendication 8, comprenant un remplissage de la pâte feuilletée avec une garniture choisie parmi le groupe constitué par une garniture sucrée, une garniture salée, et des combinaisons de celles-ci.

10. Procédé selon la revendication 8 ou la revendication 9, comprenant un agrandissement de ladite au moins une cellule fermée lors d'une exposition à de l'énergie micro-ondes.

11. Procédé selon l'une quelconque des revendications 8 à 10, comprenant une ventilation d'au moins une partie de l'emballage.
